# EUROPÄISCHE PATENTSCHRIFT

(11) **EP 3 037 264 B1**
(45) Veröffentlichungstag und Bekanntmachung des Hinweises auf die Patenterteilung: **07.02.2018**
(21) Anmeldenummer: 14199857.5
(22) Anmeldetag: 22.12.2014
(51) Int. Cl.: B32B 37/14, B29D 24/00, B29C 70/46

(54) **Wabenkern-Halbzeug und Sandwichbauteil**
Semi-finished honeycomb product and sandwich component
Semi-produit alvéolaire et élément sandwich

(43) Veröffentlichungstag der Anmeldung: 29.06.2016
(73) Patentinhaber: Magna Steyr Fahrzeugtechnik AG & Co KG, 8041 Graz (AT)
(72) Erfinder: Wolfsberger, Günter, 8501 Lieboch (AT)
(74) Vertreter: Zangger, Bernd

(56) Entgegenhaltungen:
- DE-A1-102010 005 456
- DE-A1-102012 006 609
- DE-A1-102013 013 419

## Beschreibung

### Gebiet der Erfindung

Die vorliegende Erfindung betrifft ein Verfahren zur Herstellung eines Wabenkern-Halbzeuges zur Herstellung eines Sandwichbauteiles und ein Verfahren zur Herstellung eines Sandwichbauteiles, sowie ein solches Sandwichbauteil.

### Stand der Technik

Es ist bekannt Sandwichbauteile mit Wabenkernen im Automobilbau zu verwenden, beispielsweise als Frontklappe eines Kraftfahrzeuges. Diese Sandwichbauteile können als Außenhautteile in sichtbaren Bereichen eines Fahrzeuges eingesetzt werden und bilden dabei sogenannte Class A Flächen aus, die für einen Betrachter zu erkennen sind.

Außenhautteile mit beispielsweise Papier als Sandwichkernmaterial zeigen üblicherweise nach einem Sandwichpressen zur Formgebung des Bauteiles an der Oberfläche, also an einer Deckschicht, Kernabzeichnungen bzw. Bauteilwelligkeiten die die Konturen der Stege des Papierkernes nachbilden. Dies ist auch bekannt als "Telegraphing Effekt". Dieser beeinflusst eklatant die Qualität der Oberfläche und kann später nur mehr sehr aufwändig durch Überzugsschichten oder andere aufwändige Aufbereitungsprozesse kaschiert werden.

Aus der DE 10 2010 005456 A1 ist ein Verfahren zur Herstellung eines Sandwichbauteils mit einer um einen Radius gekrümmten Form bekannt, umfassend die Schritte: Befeuchten des Wabenkerns mit Wasser durch Besprühen oder Bedampfen, Anordnen des befeuchteten Wabenkerns in einem Presswerkzeug mit einem Stempel und einer Matrize, die die vorbestimmte gekrümmte Form des Sandwichbauteils bereitstellen, Umformen des befeuchteten Wabenkerns in dem Presswerkzeug.

### Zusammenfassung der Erfindung

Es ist eine Aufgabe der Erfindung, ein Verfahren zur Herstellung eines Wabenkern-Halbzeuges zur Herstellung eines Sandwichbauteiles und ein Verfahren zur Herstellung eines Sandwichbauteiles anzugeben, dass Kernabzeichnungen an einer Deckschicht des Sandwichbauteiles zumindest verringert, sowie ein Sandwichbauteil mit geringeren oder keinen Kernabzeichnungen an einer Oberfläche.

Die Lösung der Aufgabe erfolgt durch ein Verfahren zur Herstellung eines Wabenkern-Halbzeuges zur Herstellung eines Sandwichbauteiles, umfassend die Schritte,
- Bereitstellen eines Wabenkernes,
- Befeuchten des Wabenkernes in einem Verformungs-Abschnitt der Stege des Wabenkernes,
- Stauchen des Wabenkernes im Verformungs-Abschnitt, wobei das Befeuchten durch Eintauchen des Wabenkernes in einen flüssigkeitsgefüllten Behälter erfolgt, wobei der Verformungs-Abschnitt an einem Endbereich der Stege des Wabenkernes liegt.

Erfindungsgemäß wird ein Wabenkern, bevorzugt ein Papierwabenkern, vorbehandelt, so dass es bei einer späteren Verwendung als Kern eines Sandwichbauteils und Verpressung des Sandwichbauteiles zu geringeren oder gar keinen Kernabzeichnungen auf einer sichtbaren Oberfläche des Bauteiles kommt. Dies wird dadurch erreicht, dass zumindest ein Abschnitt der Stege, also eine Schicht oder Ebene des Wabenkernes zunächst befeuchtet und im feuchten Zustand gestaucht und somit geschwächt wird ("precrushing"). Durch die Befeuchtung wird eine lokale Aufweichung der Stege erreicht. In diesem Zustand werden sodann die Stege zumindest abschnittsweise kollabiert, so dass diese bevorzugt abschnittsweise eine balgartige Struktur bilden. Durch diese Vorformung und somit Schwächung der Stege wird erreicht, dass bei einer späteren Verpressung in einem Sandwichbauteil die Stege dem Pressdruck leichter nachgeben und somit Stegabzeichnungen auf der Deckschicht verringert werden.

Um mittels des Wabenkern-Halbzeugs ein fertiges Sandwich-Bauteil herstellen zu können, wird bevorzugt später eine Matrix, beispielsweise ein Kleber, oder auch anfangs trockenes Fasermaterial auf den gestauchten Wabenkern aufgebracht, oder es werden bereits vorimpregnierte Faserhalbzeuge (prepregs) auf den Kern gelegt bzw. dieser damit ummantelt.

Der Verformungs-Abschnitt liegt erfindungsgemäß an einem Endbereich der Stege des Wabenkernes, also in einer Randzone des Wabenkernes. Diese Randzone kann bevorzugt später anliegend an eine Außenoberfläche eines Sandwichbauteiles mit diesem Wabenkern verwendet werden.

Erfindungsgemäß erfolgt das Befeuchten durch Eintauchen des Wabenkernes in einen flüssigkeitsgefüllten Behälter. Der Behälter kann beispielsweise einen Flüssigkeitspegelstand von ca. 0,5 - 5 mm aufweisen, abhängig von der jeweiligen Kerndicke und dem gewünschten Ausmaß der Vorformung.

Vorzugsweise erfolgt das Stauchen durch Drücken des Wabenkernes gegen eine ebene Fläche.

Diese ebene Fläche kann insbesondere der Boden des Behälters sein.

Das Drücken des Wabenkernes, insbesondere gegen den Boden eines Behälters, kann mittels eines ebenen Bauteiles erfolgen, wobei das ebene Bauteil an einem Ende des Wabenkernes anliegt. Das ebene Bauteil kann beispielsweise ein Deckel sein. Auf diese Weise ist es möglich gleichmäßig einen gewünschten Druck auf den Wabenkern auszuüben.

Bevorzugt wird der Wabenkern nach dem Stauchen getrocknet, insbesondere vor einer Weiterverarbeitung, beispielsweise zu einem Sandwichbauteil, insbesondere vor dem Aufbringen von Deckschichten.

Die Flüssigkeit zum Befeuchten des Wabenkernes kann wasserbasiert oder säurebasiert oder basenbasiert oder alkoholbasiert sein. Günstig ist wenn die verwendete Flüssigkeit eine geringe Oberflächenspannung und rasche Verdunstung aufweist.

Ein erfindungsgemäßes Verfahren zur Herstellung eines Sandwichbauteiles, umfasst die Schritte,
- Herstellung eines Wabenkern-Halbzeuges wie oben beschrieben,
- Aufbringen von Deckschichten auf die Enden des Wabenkernes, also oben und unten am Wabenkern, wobei die Deckschichten insbesondere aus Faserverbundmaterial oder Faserhalbzeugmaterial bestehen. Der Kern wird bevorzugt mit Fasermaterial, also Faserverbundmaterial oder Faserhalbzeugmaterial, oben und unten mit Überstand belegt oder ummantelt.

Das Fasermaterial kann eine Matrix bereits enthalten oder noch nicht enthalten, insbesondere kann die Matrix auch ein aus zwei oder mehr Komponenten bestehendes Material wie Harz mit Härter sein. Hierbei ist auch die Verwendung von Kunststoff bzw. Kunststoffharz möglich, welchem bereits kleine Faserschnösel beigemischt sind und dieses so auf die Papierkerne als Deckschicht aufgetragen wird.

Die Deckschichten können im Falle der Verwendung von Fasermaterial oder Faserhalbzeugmaterial jeweils aus einer oder mehreren Fasermaterial-/Faserhalbzeugmaterial-Schichten bzw. Lagen bestehen.

Die Faserlagen bzw. das Fasermaterial kann insbesondere aus Geweben, Gelegen, Gestrick, Gittern, Matten und/oder Vliesen bestehen. Als Fasern kommen beispielsweise Naturfasern (zum Beispiel Flachsfasern, Hanf, Bambus etc.) Glas- oder Kohlenstofffasern, Keramikfasern, Textilfasern, Kunststofffasern etc. zur Anwendung.

Nach dem Aufbringen der Deckschichten auf den Wabenkern, werden diese, besonders bei Verwendung eines trockenen Fasermaterials, vorzugsweise mit einer PUR-Matrix getränkt, besprüht und/oder benetzt.

Als Matrixmaterial kommen bevorzugt thermoplastische oder duroplastische Kunststoffe zur Anwendung.

Statt mit einem trockenen Faserhalbzeugmaterial kann der Wabenkern auch bereits mit einem mit einer Matrix vorimpregnierten Faserhalbzeugmaterial (prepreg), beispielsweise einem thermoplastischen oder duroplastischen Kunststoff, auf der Ober- und Unterseite belegt bzw. ummantelt werden.

Auch das Aufbringen eines bevorzugt noch flüssigen Faserverbundmaterials, vorzugsweise vermischt mit Kurzfasern, ist zur Erzeugung einer Deckschicht möglich.

Die Flüssigkeit zum Befeuchten des Wabenkernes vor dem Stauchen kann auch ähnlich oder gleich dem später bei der Herstellung des Sandwichbauteiles verwendeten Matrixmaterial sein, beispielsweise Isozyanat oder als Ester der Isocyansäure bei Verwendung eines PUR Matrixmaterials. In diesem Fall ist es vorteilhaft den Wabenkern vor einem weiteren Aufbringen des Matrixmaterials nicht trocknen zu lassen.

Bevorzugt wird nach dem Aufbringen der Deckschichten das Sandwich-bauteil in einem Formwerkzeug verpresst, um eine gewünschte Form zu erhalten. Die Verpressung wird bevorzugt so vorgenommen, dass eine Verformung des Sandwichbauteiles hauptsächlich im Verformungs-Abschnitt des Wabenkernes erfolgt.

Wabenkerne können bienenwabenförmige oder wellenförmige Anordnungen aufweisen oder jegliche andere erdenkliche Wabenform, wie beispielsweise rund, rechteckig, quadratisch, trapezförmig und vieleckig aufweisen, wobei es sich hierbei (innerhalb eines Wabenkernes) nicht um regelmäßig wiederkehrende Formen handeln muss.

Als Material für den Wabenkern kommen bevorzugt Papier oder Karton oder andere auf Zellulose basierte Materialien in Frage.

Ein erfindungsgemäßes Wabenkern-Halbzeug, umfasst einen Wabenkern, wobei der Wabenkern in einem Verformungs-Abschnitt, an einem Ende der Stege des Wabenkernes, gestaucht und somit geschwächt ist, besonders bevorzugt sind die Stege balgartig verformt in einer Schicht des Wabenkernes die eine Randzone bildet.

Ein erfindungsgemäßes Sandwichbauteil wird wie oben beschrieben hergestellt und weist somit einen Wabenkern auf der in einem Verformungs-Abschnitt, an einem Endbereich der Stege des Wabenkernes, gestaucht ist.

Ein solches Sandwichbauteiles kann als flächiges Bauteil eines Kraftfahrzeuges verwendet werden, insbesondere als Frontklappe, Tür, Dach, Heckklappe, Ladeboden, Abdeckung, Karosserieboden oder Torsionskasten.

Der Verformungs-Abschnitt liegt dabei bevorzugt an derjenigen Deckschicht des Sandwichbauteiles an, welche die sichtbare Außenseite des Sandwichbauteiles bildet.

### Kurzbeschreibung der Zeichnungen

Die Erfindung wird im Folgenden beispielhaft unter Bezugnahme auf die Zeichnungen beschrieben.
- Fig. 1-4: stellen schematisch vier Schritte in einem erfindungsgemäßen Verfahren zur Herstellung eines Wabenkern-Halbzeuges dar.
- Fig. 5: zeigt schematisch ein erfindungsgemäßes Sandwichbauteil mit einem Wabenkern.

### Detaillierte Beschreibung der Erfindung

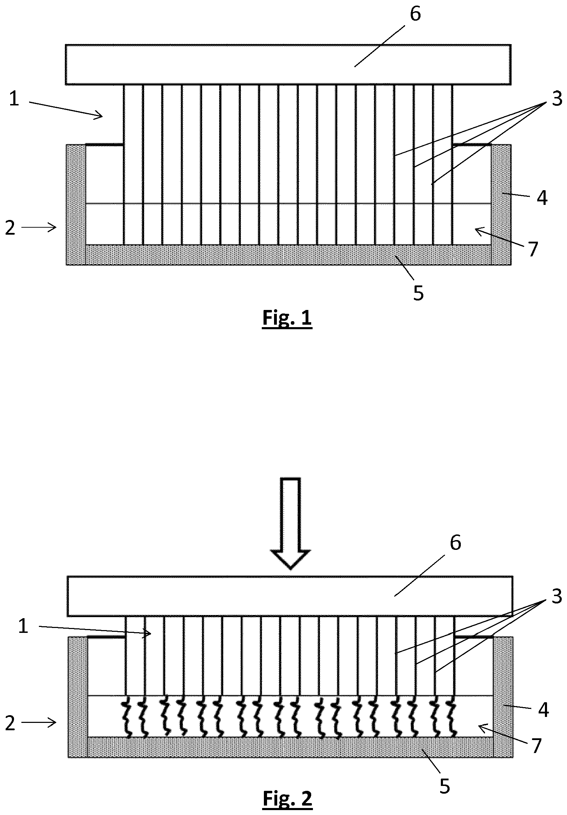

In den Fig. 1-4 sind vier Schritte eines erfindungsgemäßen Verfahrens zur Herstellung eines Wabenkern-Halbzeuges dargestellt.

Ein Wabenkern 1 wird mit seiner der späteren Außenseite zugewandten Seite, in einem Verformungs-Abschnitt 2, in ein Flüssigkeitsbad in einem Behälter 4, beispielsweise einer Wanne bzw. einem Becken, eingelegt und getaucht, so dass die Stege 3 im Verformungs-Abschnitt 2 befeuchtet werden (Fig. 1). Durch das Eindringen der Flüssigkeit 7 kommt es zur Aufweichung der Stege 3 im Verformungs-Abschnitt 2. Die Flüssigkeit 7 weist eine geringe Oberflächenspannung und rasche Verdunstung auf und ist ähnlich oder gleich einer der späteren Matrixkomponenten, zum Beispiel Isozyanat bei PUR Matrixsystemen. Der Flüssigkeitspegelstand liegt zwischen 0,5 und 5 mm. Die Verweilzeit in der Flüssigkeit 7 kann beispielsweise abhängig von der Stegstärke gewählt werden.

Der Wabenkern 1 wird von oben an den Boden 5 der Flüssigkeitswanne 4 gedrückt, mittels eines Deckels 6 (Fig. 2). Dabei wird eine Kraft in Richtung des eingezeichneten Pfeiles ausgeübt, die den Wabenkern 1 in dem befeuchteten Verformungs-Abschnitt 2 staucht. Dabei kollabiert der Wabenkern 1 in dieser Randzone durch lokale Aufweichung sowie in Abhängigkeit vom Hubweg des Deckels 6. In diesem Zustand kann der Wabenkern 1 eine vorbestimmte Zeit lang verweilen.

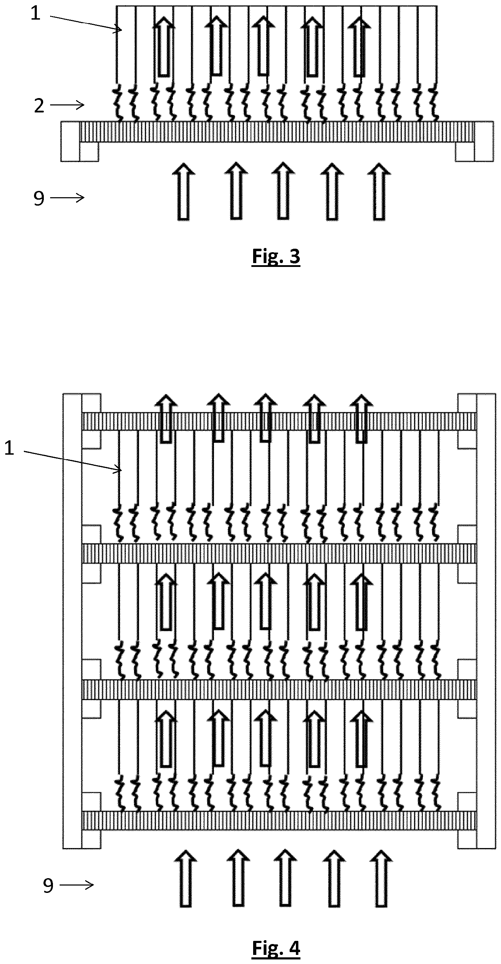

Anschließend wird der Deckel 6 und entfernt und der Wabenkern 1 aus dem Behälter 4 entnommen. Der Wabenkern 1 wird, insbesondere im Falle der Verwendung einer Flüssigkeit 7 die nicht der verwendeten Matrix entspricht, getrocknet (Fig. 3 und 4). Dabei kann der Wabenkern 1 zunächst wiederum für eine bestimmte Verweilzeit abtropfen (Fig. 3) und daraufhin eingelegt in eine Trocknungsvorrichtung die eine bestimmte Stauchhöhe vorgibt, fertigtrocknen (Fig. 4). Die dargestellten Pfeile in Fig. 3 und Fig. 4 stellen jeweils einen Luftstrom 9 dar. Im Falle der Verwendung von Matrixkomponenten im Flüssigkeitsbad 7 ist eine geringere Trockenzeit oder gar keine Trockenzeit notwendig. Eine allenfalls erforderliche Trockenzeit kann hierbei einem späteren nachfolgenden Verarbeitungsprozess angepasst beispielsweise vermindert werden, also variabel sein.

Es entsteht dabei ein Halbzeug für die weitere Verarbeitung zu einem Sandwichbauteil, wobei die in diesem Verfahren gestauchte Seite des Wabenkernes zur späteren Sichtfläche hin orientiert ist - beispielsweise bei einer Verwendung des Sandwichbauteiles im Fahrzeugbau.

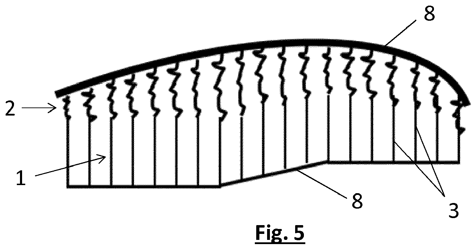

Fig. 5 stellt ein solches Sandwichbauteil dar, mit einem Wabenkern 1 zwischen zwei Deckschichten 8. An derjenigen Deckschicht 8 die später als sichtbare Außenseite verwendet wird, liegt der Verformungs-Abschnitt 2 des Wabenkernes 1 an. Das dargestellte Sandwichbauteil wurde bereits durch Pressen in eine vorbestimmte Form gebracht. Besonders an der Deckschicht 8 die dem Verformungs-Abschnitt 2 benachbart ist, weist das Sandwichbauteil nur geringe oder gar keine Kernabzeichnungen auf.

### Bezugszeichenliste

- 1: Wabenkern
- 2: Verformungs-Abschnitt
- 3: Steg
- 4: Behälter
- 5: Fläche
- 6: ebenes Bauteil
- 7: Flüssigkeit
- 8: Deckschicht
- 9: Luftstrom

## Patentansprüche

1. Verfahren zur Herstellung eines Wabenkern-Halbzeuges zur Herstellung eines Sandwichbauteiles, umfassend die Schritte,
- Bereitstellen eines Wabenkernes (1),
- Befeuchten des Wabenkernes (1) in einem Verformungs-Abschnitt (2) der Stege (3) des Wabenkernes (1),
- Stauchen des Wabenkernes (1) im Verformungs-Abschnitt (2),
**dadurch gekennzeichnet, dass** das Befeuchten durch Eintauchen des Wabenkernes (1) in einen flüssigkeitsgefüllten Behälter (4) erfolgt, wobei der Verformungs-Abschnitt (2) an einem Endbereich der Stege (3) des Wabenkernes (1) liegt.

2. Verfahren nach Anspruch 1,
**dadurch gekennzeichnet, dass** das Stauchen durch Drücken des Wabenkernes (1) gegen eine Fläche (5) erfolgt.

3. Verfahren nach Anspruch 1 und 2,
**dadurch gekennzeichnet, dass** die Fläche (5) der Boden des Behälters (4) ist.

4. Verfahren nach Anspruch 2 oder 3,
**dadurch gekennzeichnet, dass** das Drücken mittels eines ebenen Bauteiles (6) erfolgt, wobei das ebene Bauteil (6) an einem Ende des Wabenkernes (1) anliegt.

5. Verfahren nach zumindest einem der vorhergehenden Ansprüche,
**dadurch gekennzeichnet, dass** der Wabenkern (1) nach dem Stauchen getrocknet wird.

6. Verfahren nach zumindest einem der vorhergehenden Ansprüche, **dadurch gekennzeichnet, dass** die Flüssigkeit (7) zum Befeuchten des Wabenkernes (1) wasserbasiert oder säurebasiert oder basenbasiert oder alkoholbasiert ist.

7. Verfahren zur Herstellung eines Sandwichbauteiles, umfassend die Schritte,
- Herstellung eines Wabenkern-Halbzeuges nach einem der Ansprüche 1 bis 6
- Aufbringen von Deckschichten (8) auf die Enden des Wabenkernes (1), wobei die Deckschichten (8) insbesondere aus Faserverbundmaterial oder Faserhalbzeugmaterial bestehen.

8. Verfahren nach Anspruch 7,
**dadurch gekennzeichnet, dass** die Flüssigkeit (7) zum Befeuchten des Wabenkernes (1) ähnlich oder gleich einem Matrixmaterial des Sandwichbauteils ist, beispielsweise Isozyanat bei Verwendung eines PUR Matrixmaterials.

9. Verfahren nach Anspruch 7 oder 8,
**dadurch gekennzeichnet, dass** nach dem Aufbringen der Deckschichten (8) das Sandwichbauteil in einem Formwerkzeug verpresst wird um eine gewünschte Form zu erhalten.

10. Sandwichbauteil, umfassend einen Wabenkern (1, der nach einem der Ansprüche 1 - 9 hergestellt wird, wobei der Wabenkern (1) in einem Verformungs-Abschnitt (2) an einem Endbereich der Stege (3) des Wabenkernes (1) gestaucht ist, so, dass die Stege (3) in diesem Endbereich eine balgartige Struktur bilden, und Deckschichten (8) die beidseitig auf die Enden des Wabenkernes (1) aufgebracht sind, wobei die Deckschichten (8) insbesondere aus Faserverbundmaterial oder Faserhalbzeugmaterial bestehen.

## Claims

1. Method for producing a semifinished honeycomb-core product for producing a sandwich component, comprising the steps of:
- providing a honeycomb core (1),
- moistening the honeycomb core (1) in a deformation portion (2) of the webs (3) of the honeycomb core (1),
- crumpling the honeycomb core (1) in the deformation portion (2),
**characterized in that** the moistening is carried out by the honeycomb core (1) being dipped into a liquid-filled container (4), wherein the deformation portion (2) is located in an end region of the webs (3) of the honeycomb core (1).

2. Method according to Claim 1,
**characterized in that** the crumpling is carried out by the honeycomb core (1) being pushed against a surface (5).

3. Method according to Claims 1 and 2,
**characterized in that** the surface (5) is the bottom of the container (4).

4. Method according to Claim 2 or 3,
**characterized in that** the pushing is carried out by means of a planar component (6), wherein the planar component (6) bears against one end of the honeycomb core (1).

5. Method according to at least one of the preceding claims,
**characterized in that** the honeycomb core (1) is dried following the crumpling.

6. Method according to at least one of the preceding claims,
**characterized in that** the liquid (7) for moistening the honeycomb core (1) is water-based or acid-based or base-based or alcohol-based.

7. Method for producing a sandwich component, comprising the steps of:
- producing a semifinished honeycomb-core product according to one of Claims 1 to 6,
- applying outer layers (8) to the ends of the honeycomb core (1), wherein the outer layers (8) consist in particular of fibre composite material or semifinished fibre material.

8. Method according to Claim 7,
**characterized in that** the liquid (7) for moistening the honeycomb core (1) is similar or identical to a matrix material of the sandwich component, for example isocyanate when a PUR matrix material is used.

9. Method according to Claim 7 or 8,
**characterized in that**, after the outer layers (8) have been applied, the sandwich component is compressed in a moulding tool in order to obtain a desired shape.

10. Sandwich component comprising a honeycomb core (1) produced according to one of Claims 1-9, wherein the honeycomb core (1) is crumpled in a deformation portion (2) in an end region of the webs (3) of the honeycomb core (1), such that the webs (3) form a bellows-like structure in this end region, and outer layers (8) which have been applied on both sides to the ends of the honeycomb core (1), wherein the outer layers (8) consist in particular of fibre composite material or semifinished fibre material.

## Revendications

1. Procédé de fabrication d'un semi-produit de noyau alvéolaire destiné à la fabrication d'un élément sandwich, comprenant les étapes suivantes:
- préparer un noyau alvéolaire (1),
- humidifier le noyau alvéolaire (1) dans une partie de déformation (2) des feuilles (3) du noyau alvéolaire (1),
- refouler le noyau alvéolaire (1) dans la partie de déformation (2),
**caractérisé en ce que** l'on effectue l'humidification par immersion du noyau alvéolaire (1) dans un récipient (4) rempli de liquide, dans lequel la partie de déformation (2) est située à une région d'extrémité des feuilles (3) du noyau alvéolaire (1).

2. Procédé selon la revendication 1, **caractérisé en ce que** l'on effectue le refoulement par compression du noyau alvéolaire (1) contre une face (5).

3. Procédé selon la revendication 1 ou 2, **caractérisé en ce que** la face (5) est le fond du récipient (4).

4. Procédé selon la revendication 2 ou 3, **caractérisé en ce que** l'on effectue la compression au moyen d'un élément plat (6), dans lequel l'élément plat (6) est appliqué sur une extrémité du noyau alvéolaire (1).

5. Procédé selon au moins une des revendications précédentes, **caractérisé en ce que** l'on sèche le noyau alvéolaire (1) après le refoulement.

6. Procédé selon au moins une des revendications précédentes, **caractérisé en ce que** le liquide (7) destiné à humidifier le noyau alvéolaire (1) est à base d'eau ou à base d'acide ou à base de base ou à base d'alcool.

7. Procédé de fabrication d'un élément sandwich, comprenant les étapes suivantes:
- fabriquer un semi-produit de noyau alvéolaire selon l'une quelconque des revendications 1 à 6,
- déposer des couches de recouvrement (8) sur les extrémités du noyau alvéolaire (1), dans lequel les couches de recouvrement (8) se composent en particulier d'un matériau composite fibreux ou d'un matériau de semi-produit fibreux.

8. Procédé selon la revendication 7, **caractérisé en ce que** le liquide (7) destiné à humidifier le noyau alvéolaire (1) est similaire ou identique à un matériau de matrice de l'élément sandwich, par exemple de l'isocyanate en cas d'utilisation d'un matériau de matrice en PUR.

9. Procédé selon la revendication 7 ou 8, **caractérisé en ce qu'**après le dépôt des couches de recouvrement (8), l'élément sandwich est pressé dans un outil de formage afin qu'il prenne une forme désirée.

10. Elément sandwich, comprenant un noyau alvéolaire (1), qui est fabriqué selon l'une quelconque des revendications 1 à 9, dans lequel le noyau alvéolaire (1) est refoulé dans une partie de déformation (2) à une région d'extrémité des feuilles (3) du noyau alvéolaire (1), de telle manière que les feuilles (3) forment dans cette région d'extrémité une structure en forme de soufflet, et des couches de recouvrement (8) sont déposées sur les deux côtés sur les extrémités du noyau alvéolaire (1), dans lequel les couches de recouvrement (8) se composent en particulier de matériau composite fibreux ou de matériau de semi-produit fibreux.
